# EUROPÄISCHE PATENTANMELDUNG

(11) **EP 0 913 620 A2**
(43) Veröffentlichungstag der Anmeldung: **06.05.1999**
(21) Anmeldenummer: 98118406.2
(22) Anmeldetag: 29.09.1998
(51) Int. Cl.: F16L 51/00, F16L 51/02

(54) **Verbindungssystem zur Verbindung zweier Kanalstücke eines von einem heissen Fluid durchströmbaren Kanals**

(30) Priorität: 01.10.1997 DE 19743548
(71) Anmelder: SIEMENS AKTIENGESELLSCHAFT, 80333 München (DE)
(72) Erfinder: Bähr, Siegfried, Dipl.-Ing., 91330 Eggolsheim (DE); Lorenz, Dirk, Dipl.-Ing., 91058 Erlangen (DE); Schmid, Rudolf, Dipl.-Ing., 91315 Höchstadt a. d. Aisch (DE)

(57) **Zusammenfassung**

Um in besonders einfacher Art und Weise eine Verbindung zwischen zwei Kanalstücken zu ermöglichen, sind erfindungsgemäß an beiden Kanalstücken jeweils ein radial umlaufender Ring (6, 8) angeordnet, wobei die beiden Ringe (6, 8) mittels eines Ausgleichselementes (26) so miteinander verbunden sind, daß sie gegeneinander verschiebbar sind.

## Beschreibung

Die Erfindung betrifft ein Verbindungssystem zur Verbindung zweier Kanalstücke eines von einem heißen Fluid durchströmbaren Kanals, insbesondere eines Rauchgaskanals einer Gasturbine.

Eine Gasturbine wird in vielen Bereichen zum Antrieb eines Generators oder einer Arbeitsmaschine eingesetzt. Dabei wird der Energiegehalt eines Brennstoffs zur Erzeugung einer Rotationsbewegung der Turbinenwelle genutzt. Das bei der Verbrennung des Brennstoffs entstehende Arbeitsmittel oder heiße Gas wird dazu in der Gasturbine entspannt und sodann als Abgas oder Rauchgas einem an die Gasturbine angeschlossenen Rauchgaskanal zugeführt.

Der Rauchgaskanal der Gasturbine umfaßt üblicherweise mehrere miteinander verbundene Komponenten oder Kanalstücke. Je nach Auslegung und der Einsatzart der Gasturbine sind als Komponenten ein Diffusor, ein Kompensator und/oder weitere Elemente, wie z.B. eine Abgasweiche und ein Bypasskamin, vorgesehen.

Jede Komponente wird beim Betrieb der Gasturbine üblicherweise durch das sie durchströmende Abgas oder Rauchgas aufgeheizt, wobei sich das Rauchgas entlang der Rauchgasrichtung durch Wärmeaustausch mit den jeweiligen Komponenten abkühlt. Angesicht der starken Temperaturbelastungen ist jede Komponente mittels Isolationsmaterial isoliert.

Üblicherweise ist der zwischen dem Diffusor und der Abgasweiche angeordnete Kompensator, z. B. ein Gewebekompensator, isoliert. Dabei ist der Gewebekompensator mittels eines Profil-Flansches an der Außenwand oder Grundschale des Diffusors über eine Schweißnaht befestigt. Diese Schweißnaht sowie der Profil-Flansch sind jedoch bei Vibrationen sowie infolge von zu hohen Spannungen im Profil-Flansch, wie sie beispielsweise bei transienter Fahrweise der Gasturbine oder bei Strömungspulsationen, bei denen der Rauchgaskanal durch stark schwankende Temperaturen und durch hohe Strömungsgeschwindigkeiten des Rauchgases erheblich beansprucht ist, auftreten können, erheblichem Verschleiß, insbesondere Biegebeanspruchungen, ausgesetzt. Dabei kann die Verbindung zwischen dem Diffusor und dem Gewebekompensator instabil werden, so daß diese beschädigt wird. Derartige Beschädigungen, z.B. Verformungen des Profil-Flansches oder ein Aufreißen des Gewebekompensators, haben aufgrund von Reparaturarbeiten eine Verringerung der Betriebszeit der Gasturbine zur Folge.

Darüber hinaus kommt es bedingt durch unterschiedliche Temperaturbelastungen der beiden Kanalstücke, d. h. des außenisolierten Diffusors und des Gewebekompensators, über den Profil-Flansch zu einem Wärmetransport von dem heißen Diffusor auf den kälteren Gewebekompensator, wodurch der Gewebekompensator bei zu starker Temperaturbelastung beschädigt wird.

Der Erfindung liegt daher die Aufgabe zugrunde, ein Verbindungssystem zur Verbindung zweier Kanalstücke eines von einem heißen Fluid durchströmbaren Kanals anzugeben, das auch bei wechselnden Temperaturbelastungen eine besonders lange Lebensdauer aufweist.

Diese Aufgabe wird erfindungsgemäß gelöst mit einem Verbindungssystem, wobei an beiden Kanalstücken jeweils ein radial umlaufender Ring angeordnet ist, und wobei die beiden Ringe mittels eines Ausgleichselementes so miteinander verbunden sind, daß sie gegeneinander verschiebbar sind.

Die Erfindung geht dabei von der Überlegung aus, daß eine Beschädigung eines kälteren Kanalstücks, z. B. eines Gewebekompensators, weitgehend vermieden werden kann, indem die aus den Wärmeausdehnungen der Wand des heißen Kanalstücks, z.B. eines Diffusors, resultierenden Spannungen zwischen den beiden Kanalstücken und der Wärmeübergang besonders gering gehalten bzw. vermieden sind. Dazu ist zwischen den an den Kanalstücken vorgesehenen Ringen das Ausgleichselement angeordnet.

Insbesondere durch mehrere symmetrisch um die Kanalstücke angeordnete Ausgleichselemente, sogenannte Schiebesitz-Verbindungen, sind Wärmedehnungen über den gesamten Umfang der Kanalstücke aufnehmbar. Jedes Ausgleichselement weist dabei eine besonders hohe Biege- und Druckfestigkeit auf. Die Befestigung der Ausgleichselemente erfolgt vorzugsweise an den beiden den Kanal rotationssymmetrisch umlaufenden Ringen. Dabei sind die beiden Ringe mittels der Ausgleichselemente miteinander verbunden.

Zweckmäßigerweise ist der erste Ring an dem heißen und außenisolierten Kanalstück, z. B. an dem Diffusor, insbesondere an dessen Außenwand, befestigt. Beispielsweise wird als erster Ring ein sogenanntes Flachprofil verwendet, das umlaufend an der Außenwand des Kanalstücks angeschweißt ist. Der zweite Ring ist vorteilhafterweise an dem kalten und innenisolierten Kanalstück, z. B. an dem Gewebekompensator, befestigt. Dabei ist der zweite Ring beispielsweise als L-Flansch ausgeführt.

Das eine Ende des Ausgleichselements ist zweckmäßigerweise am ersten Ring mittels einer Schweißnaht befestigt. Das andere Ende des Ausgleichselements weist vorteilhafterweise eine Ausnehmung zur Wegbegrenzung eines Führungsbolzens auf, der an dem zweiten Ring befestigt ist. Durch eine derartige Schiebesitz-Verbindung zwischen dem ersten und dem zweiten Ring, wobei der Führungsbolzen des zweiten Ringes in der Ausnehmung oder in dem Langloch des Ausgleichselements geführt ist, sind Beschädigungen des Gewebekompensators durch Ausdehnungsbewegungen des Diffusors besonders sicher vermieden.

In besonders vorteilhafter Ausgestaltung sind die Ausnehmungen dabei derart dimensioniert, daß nur ein vergleichsweise geringer Wärmetransport vom ersten Ring auf den zweiten Ring möglich ist. Dadurch ist eine unerwünschte Aufheizung des Gewebekompensators weitgehend vermieden, so daß Beschädigungen des Gewebekompensators infolge von Überhitzung nur in besonders geringem Maße auftreten.

Um einen Gasdurchgang zwischen den umlaufenden Ringen durch die Ausnehmung und Öffnung des Ausgleichselements zu vermeiden, ist ein Federsegment zur Abdichtung der Ausnehmung und der Öffnung vorgesehen. Dabei ist das Federsegment vorteilhafterweise an dem auf dem ersten Ring aufliegenden Ende gewölbt. Diese Wölbung dient zur Aufnahme einer Dichtschnur.

Für eine besonders effektive Abdichtung der Öffnung des Ausgleichselements ist das eine Ende des Federsegmentes derart am ersten Ring befestigt, daß das andere die Dichtschnur umfassende Ende des Federsegmentes unter Spannung auf den ersten Ring gepreßt ist. Angesichts der Ausdehnungsbewegungen des ersten Ringes kann es zu einem Verschleiß der Dichtschnur kommen. Vorteilhafterweise ist durch die Verwendung des Federsegments zum Anklemmen der Dichtschnur ein schnelles und einfaches Auswechseln der Dichtungen ermöglicht.

Die mit der Erfindung erzielten Vorteile bestehen insbesondere darin, daß durch ein zwischen einem kälteren und einem heißen Kanalstück, z.B. zwischen dem Gewebekompensator und dem Diffusor des Rauchgaskanals, angeordnetes Ausgleichselement thermische Spannungen, insbesondere Wärmeausdehnungen, sowie ein Wärmeübergang aufgenommen bzw. vermieden werden. Zudem sind aus unterschiedlichen Belastungen, z.B. thermischen Belastungen sowie Druck- und Biegebelastungen des Rauchgaskanals, resultierende Beschädigungen des Gewebekompensators vermieden. Der Gewebekompensator ist somit auch bei häufig wechselnden Lastzuständen der Gasturbine und demzufolge auch bei thermischen Ausdehnungs- oder Kontraktionsvorgängen besonders sicher und zuverlässig befestigt. Aufgrund der Ausnehmung im Ausgleichselement ist zudem mit besonders einfachen Mitteln eine Überhitzung des Gewebekompensators und eine daraus resultierende Beschädigung besonders sicher vermieden. Außerdem ist mittels des Federsegmentes zum Niederhalten der Dichtschnur eine besonders einfache Dichtlippen-Verbindung gegeben, die die Öffnung oder Ausnehmung des Ausgleichselements besonders einfach abdichtet.

Ein Ausführungsbeispiel der Erfindung wird anhand einer Zeichnung näher erläutert. Es zeigen:
- Figur 1: schematisch im Querschnitt einen Rauchgaskanal mit zwei Kanalstücken, zwischen denen eine Anzahl von Verbindungssystemen radialsymmetrisch angeordnet ist, und
- Figur 2: das Verbindungssystem zur Verbindung der beiden Kanalstücke gemäß Figur 1.

Einander entsprechende Teile sind in beiden Figuren mit denselben Bezugszeichen versehen.

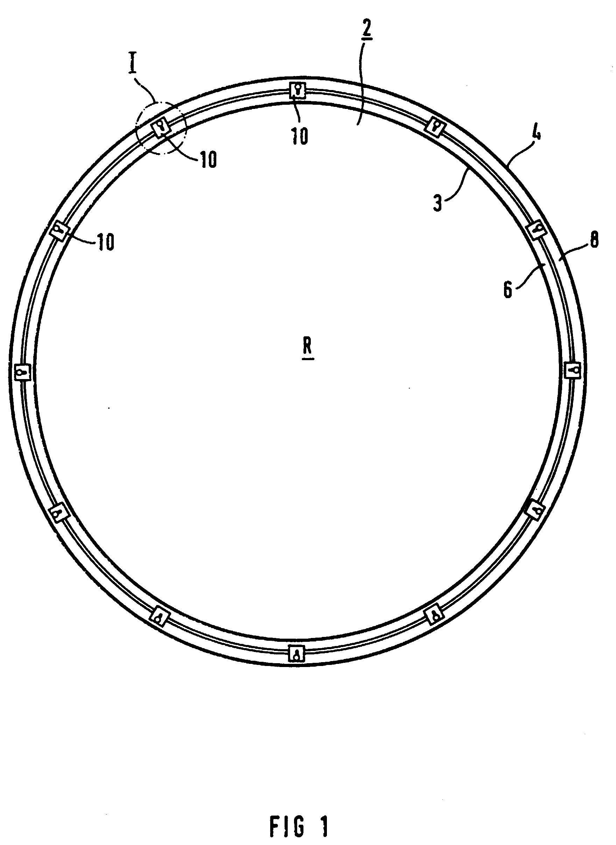

Figur 1 zeigt einen von einem heißen Rauchgas R durchströmbaren Rauchgaskanal 2 einer nicht dargestellten Gasturbine. Dabei weist der Rauchgaskanal 2 als zwei Kanalstücke einen Diffusor 3 und einen diesen umlaufenden Gewebekompensator 4 auf.

Zwischen dem Diffusor 3 und dem Gewebekompensator 4 sind zwei den Diffusor 3 koaxial umlaufende Ringe 6 und 8 vorgesehen. Der erste Ring 6 ist an dem Diffusor 3 befestigt. Der zweite Ring 8 ist an dem Gewebekompensator 4 befestigt.

Die beiden Ringe 6 und 8 sind dabei mittels einer Anzahl von rotationssymmetrisch um den Diffusor 3 angeordneten Verbindungssystemen 10 so miteinander verbunden, daß die beiden Ringe 6 und 8 und demzufolge auch der Diffusor 3 und der Gewebekompensator 4 gegeneinander verschiebbar sind.

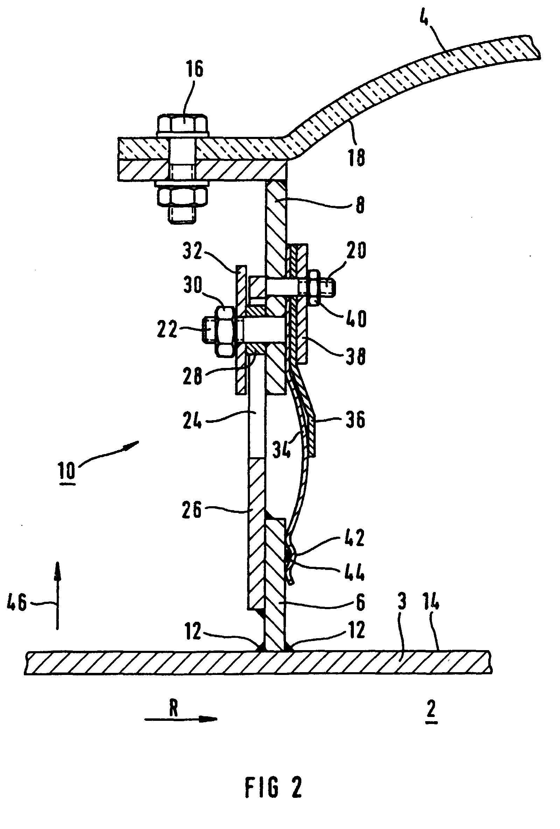

Figur 2 zeigt im Detail das Verbindungssystem 10. Das Verbindungssystem 10 umfaßt ein zwischen dem ersten Ring 6 und dem zweiten Ring 8 angeordnetes Ausgleichselement 26.

Der erste Ring 6, der beispielsweise als Flachprofil ausgeführt ist, ist mittels einer Schweißnaht 12 an der Außenwand 14 des Diffusors 3 angeschweißt. Der zweite Ring 8, der z.B. als ein L-Flansch ausgeführt ist, ist mit dem einen Ende beispielsweise mittels einer Schraubverbindung 16 an der Innenwand 18 des Gewebekompensators 4 befestigt. Das um 90° versetzte andere Ende des zweiten Ringes 8 weist einen Verbindungsbolzen 20 sowie einen Führungsbolzen 22 auf. Dabei sind der Verbindungsbolzen 20 und der Führungsbolzen 22 jeweils mit einem Ende in Öffnungen, z.B. Bohrungen, des zweiten Ringes 8 geführt und mittels einer Schweiß- oder Schraubverbindung am zweiten Ring 8 befestigt. Die in den zweiten Ring 8 mündenden Enden des Verbindungsbolzens 20 und des Führungsbolzens 22 schließen dabei jeweils mit der Oberfläche des zweiten Ringes 8 ab.

Das aus dem zweiten Ring 8 herausstehende Ende des Führungsbolzens 22 ist in einer Ausnehmung 24 des Ausgleichselements 26 geführt. Bei der Ausnehmung 24 handelt es sich beispielsweise um ein Langloch in einem als Flach-Profil ausgeführten Ausgleichselement 26 oder um die Öffnung eines als U-Profil ausgeführten Ausgleichselements 26. Dabei ist die Ausnehmung 24 derart dimensioniert, daß nur ein vergleichsweise geringer Wärmetransport von dem ersten Ring 6 auf den zweiten Ring 8 möglich ist.

Damit der Führungsbolzen 22 besonders leicht verschiebbar ist, ist eine Distanzscheibe 28 vorgesehen, deren Höhe größer ist als die Höhe des Ausgleichselements 26. Die Distanzscheibe 28 ist beispielsweise eine Tellerscheibe, die den Führungsbolzen 22 formschlüssig umgibt. Damit der Führungsbolzen 22 und demzufolge der zweite Ring 8 an dem Ausgleichselement 26 und somit auch an dem ersten Ring 6 befestigbar ist, weist das über die Ausnehmung 24 hinausstehende Ende des Führungsbolzens 22 ein Gewinde zur Aufnahme einer Mutter 30 auf.

Zur Vergrößerung der Auflagefläche der Mutter 30 auf dem Ausgleichselement 26 ist zwischen dem Ausgleichselement 26 und der Mutter 30 eine Auflegscheibe 32 angeordnet. Mittels der Auflegscheibe 32 sowie der Distanzscheibe 28 ist ein sicheres Führen des Führungsbolzens 22 in der Ausnehmung 24 gewährleistet. Insbesondere ist aufgrund der Vergrößerung der Auflagefläche ein Verkanten oder Verwackeln des Führungsbolzens 22 vermieden.

Um die zwischen dem ersten Ring 6 und dem zweiten Ring 8 bedingt durch die Ausnehmung 24 auftretende Öffnung hinsichtlich eines Gasdurchgangs besonders einfach abdichten zu können, sind an dem Verbindungsbolzen 20 übereinander ein Federsegment 34, ein Niederhalter 36 und eine Flachschiene 38 mittels einer Schraubverbindung 40 befestigt. Durch Anziehen der Schraubverbindung 40 wird der Niederhalter 36 auf das Federsegment 34 gepreßt. Damit die Auflagefläche auf den Niederhalter 36 vergrößert ist, ist zwischen der Schraubverbindung 40 und dem Niederhalter 36 die Flachschiene 38 angeordnet.

Das Federsegment 34 überdeckt die Ausnehmung 24 und liegt mit dem von dem zweiten Ring 8 abgewandten Ende auf dem ersten Ring 6 auf. Dabei weist dieses auf dem ersten Ring 6 aufliegende Ende des Federsegmentes 34 eine Wölbung 42 zur Aufnahme einer Dichtschnur 44 auf. Somit ist ein Gasdurchgang durch die Ausnehmung 24 verhindert.

Durch eine mittels des Ausgleichselements 26 erzielbare Schiebesitz-Verbindung des Diffusors 3 mit dem Gewebekompensator 4 ist für den Diffusor 3 die Möglichkeit einer begrenzten thermischen Ausdehnung in die durch den Pfeil 46 angedeuteten Längsrichtung gegeben. Somit ist eine durch thermische Ausdehnungen hervorgerufene Beschädigung des Gewebekompensators 4 vermieden.

## Patentansprüche

1. Verbindungssystem zur Verbindung zweier Kanalstücke eines von einem heißen Fluid durchströmbaren Kanals miteinander, wobei an beiden Kanalstücken jeweils ein radial umlaufender Ring (6, 8) angeordnet ist, und wobei die beiden Ringe (6, 8) mittels eines Ausgleichselementes (26) so miteinander verbunden sind, daß sie gegeneinander verschiebbar sind.

2. Verbindungssystem nach Anspruch 1, wobei mindestens ein Ring (8) als L-Flansch ausgeführt ist.

3. Verbindungssystem nach Anspruch 1 oder 2, wobei der eine Ring (8) einen Führungsbolzen (22) aufweist, der in einer Ausnehmung (24) des Ausgleichselements (26) geführt ist.

4. Verbindungssystem nach Anspruch 3, wobei ein Federsegment (34) zur Abdichtung der Ausnehmung (24) vorgesehen ist.

5. Verbindungssystem nach Anspruch 4, wobei das Federsegment (34) eine Wölbung (42) zur Aufnahme einer Dichtung aufweist.

6. Verbindungssystem nach Anspruch 4 oder 5, wobei ein Niederhalter (36) zum Niederhalten des Federsegmentes (34) vorgesehen ist.

7. Rauchgaskanal einer Gasturbine, bei dem ein vom Rauchgas (R) durchströmbares Kanalstück mit einem Gewebekompensator (4) über ein Verbindungssystem (10) nach einem der Ansprüche 1 bis 6 verbunden ist.
